# EUROPEAN PATENT SPECIFICATION

(11) **EP 1 381 880 B1**
(45) Date of publication and mention of the grant of the patent: **24.08.2005**
(21) Application number: 02725631.2
(22) Date of filing: 12.04.2002
(51) Int. Cl.: G01S 7/41, G01S 7/48, G01V 8/20

(54) **TRAINABLE LASER OPTICAL SENSING SYSTEM FOR TARGET CHARACTERISATION**
TRAINIERBARES LASER-OPTISCHES SENSORSYSTEM ZUR OBJEKTERKENNUNG
SYSTEME DE DETECTION OPTIQUE LASER POUVANT APPRENDRE PERMETTANT LA CARACTERISATION DE CIBLES

(30) Priority: 12.04.2001 US 834242
(43) Date of publication of application: 21.01.2004
(73) Proprietor: Honeywell International Inc., Morristown, New Jersey 07960 (US)
(72) Inventor: TATUM, Jimmy, A., Plano, TX 75025 (US); GUENTER, James, K., Garland, TX 75044 (US)
(74) Representative: Haley, Stephen
(86) International application number: PCT/US2002/011463
(87) International publication number: WO 2002/084323

(56) References cited:
- WO-A-88/00745
- DE-A- 4 404 483
- US-A- 5 266 810
- US-A- 5 635 724
- US-A- 5 793 485
- US-A- 5 835 613

## Description

### TECHNICAL FIELD

The present invention relates generally to the field of sensing. More specifically, the present invention relates to laser optical sensing systems and methods. The present invention is also related to a trainable laser optical sensing system with the addition of a memory and training module.

### BACKGROUND OF THE INVENTION

Previous approaches to addressing sensing needs have generally involved using a single light signal from a light source, such as a light emitting diode, and multiple detectors. In order to illuminate a large area in an environment using a single light source, two general methods are known. One approach typically involves emitting a broad light signal from the light source and detecting the signal with one of multiple detectors positioned throughout the environment. The other approach typically involves emitting a narrow light signal from the light source, spreading the signal around the environment by reflecting it off of a rotating mirror, for instance, and detecting the signal with one of multiple detectors positioned throughout the environment. While feasible, both approaches typically require multiple detectors and are usually not power efficient as a result, yielding a low signal-to-noise ratio. A poor power-transfer ratio reflects this inefficiency as the individual detector that receives a light signal usually detects only a portion of the signal that was originally emitted. Consequently, the signal that was detected generally provides only limited information about a target being sensed in the environment (e.g., presence, general location). These approaches also tend to limit the size range of the target being sensed in an environment due to the nature of the single light signal.

The limitations of previous approaches are often manifested in applications such as detecting the motion of a target in an environment. Many motion detection systems generally involve a line-of-sight operation, where at least one detector detects the motion of a target as the target breaks a beam of light emitted from a light source. In relatively simple applications, such as determining the presence or absence of a target, this approach generally suffices. For more complex applications, such as determining the direction of the target's motion, this approach proves less adequate. When a target moves across a single light signal emitted by a light source, the signal received by a detector gradually decreases as the signal blocked by the target gradually increases. As generally known in the art, measurement of such a gradual change in signal detection typically requires a complex algorithm to determine the position of a target in the environment. Adding multiple detectors can provide more information and decrease the complexity of the algorithm required, however, this generally introduces power inefficiencies as mentioned previously as well as added cost associated with additional hardware.

The limitations of the aforementioned approaches also relate to applications involving target recognition. Many known systems, either for recognizing only specific targets or for mapping spatial characteristics of targets, involve spreading a light signal with a rotating mirror and/or using multiple detectors. Holograms can also be used to spread the light signal by dividing the signal into smaller light signals. An approach for detecting only specifio targets involves emitting pulses of signals from a transceiver, receiving the signals that reflect off of a target, and comparing the received signals with preset signals reflected off of known targets, signals typically stored in a database. One approach for mapping a target involves superimposing light signals received by different detectors in the presence of a target and comparing the signals with respect to signals associated with the environment without the target.

While each of these approaches is feasible for a particular function, none is known to perform several functions (e.g., location, direction of travel, characteristics). This deficiency creates a need for a versatile system that is both power-efficient and cost-effective. It has become apparent to the present inventors that such a system could be capable of, for instance, detecting the presence or absence of any target or of a specific target, detecting the spatial characteristics of a target, detecting the motion of a target, or detecting various characteristics about the motion of a target.

US-A-5835613 discloses an optical identification and monitoring system using pattern recognition for use with vehicles.

WO-A-8800745 discloses a detection system.

US-A-5793485 discloses a resonant-cavity apparatus for cytometry or particle analyis.

According to an aspect of the present invention, there is provided a laser optical sensing system for detecting target characteristics, which comprises:
a laser source adapted for operation by illumination through at least two emission apertures of an at least 2 aperture-by-at least 2 aperture array, wherein illumination through said at least two emission apertures thereby creates at least two laser signals;
at least one detector operationally responsive to said laser source;
a microprocessor operationally coupled to said at least one detector;
a memory for storing target characteristics; and
a training and detection module for enabling the training of the system for target recognition;
wherein said laser source emits at least two laser signals through said at least two emission apertures into an environment occupied by a target, said at least one detector detects said at least two laser signals, and said microprocessor determines target characteristics based on comparison of said signals received by said detector with said target characteristics stored in said memory.

In one embodiment, the laser optical sensing system comprises a trainable laser optical sensing system for detecting target characteristics using a vertical cavity surface emitting laser. The system may include a vertical cavity surface emitting laser structure with the at least two emission apertures being defined by photolithography.

The microprocessor may determine target characteristics based on laser signals received by the detector (s) and comparison with known target characteristic data stored in memory. Within the same laser source, the laser signals emitted can be identical or not identical. Optics can also be added to the system, such that laser signals pass through at least one lens or reflect off a mirror or mirrors after exiting the emission apertures.

According to another aspect of the present invention, there is provided a method for detecting target characteristics comprising the steps of:
emitting light through at least two emission apertures of an at least 2 aperture-by-at least 2 aperture array into an environment using a vertical cavity surface emitting laser structure, wherein emitting said light through said at least two emission apertures thereby creates at least two laser signals;
blocking at least one of said laser signals by at least one target located within said environment; receiving any of said laser signals not blocked by said target with at least one detector; accessing a memory containing stored target characteristics; and
determining target characteristics with a microprocessor by comparing characteristics of signals received by said detector to stored target characteristics contained within said memory.

Embodiments of the invention provide trainable characteristics of the system for accurate detection of targets. A laser optical sensing system can include the addition of an intelligent/trainable memory (e.g., can include an intelligent database, neural network, etc) for use in training the system to recognize objects/targets. In accordance with methods for training the system (eg., target detection and characteristic determination) the system is trained with known or test target references. A laser source, such as a vertical cavity surface emitting laser structure, emits at least two laser signals into an environment, an environment that may be occupied by a reference or test target. At least one detector detects the laser signals once they have passed through the environment. Detecting signals are provided to the microprocessor to determine target characteristics based on laser signals received by the detector(s) and storing the information in memory (eg., database). During operation a laser source, such as a vertical cavity surface emitting laser structure, emits at least two laser signals into an environment occupied by a target. At least one detector detects the laser signals once they have passed through the environment containing the target. Detecting signals are provided to the microprocessor to determine the target's characteristics based on laser signals received by the detector(s) and for matching the target's characteristics acquired through a laser-based target detection system with known/memorized test target data stored in memory.

In addition, embodiments of the invention provide methods for detecting target characteristics transmissively or reflectively using a vertical cavity surface emitting laser.

In a transmissive method, a vertical cavity surface emitting laser structure can statically emit at least two laser signals into an environment, which may be occupied by a target. The target can block at least one of the laser signals passing through the environment, and at least one detector can transmissively receive any of the signals not blocked by the target. A microprocessor can then determine target characteristics by comparing characteristics of the laser signals emitted by the vertical cavity surface emitting laser structure with characteristics of the signals received by the detector(s) and which are also stored in memory.

In a reflective method, a vertical cavity surface emitting laser structure can serially emit at least one laser signal at a time into an environment, which may be occupied by a target. At least one of the laser signals can reflect off of the target and can be detected by at least one detector. A microprocessor can then determine target characteristics by comparing temporal characteristics of the laser signals emitted by the vertical cavity surface emitting laser structure with temporal characteristics of the signals received by the detector(s).

In any method taught by the present invention or embodiments thereof, a microprocessor could determine the size or shape of a target by determining which laser signals are received by a detector after different arrays of laser signals are emitted by a vertical cavity surface emitting laser structure. The microprocessor could also detect motion of the target in an environment by detecting changes in the array of laser signals that are blocked or reflected off of the target.

### BRIEF DESCRIPTION OF THE DRAWINGS

The accompanying figures, in which like reference numerals refer to identical or functionally-similar elements throughout the separate views and which are incorporated in and form part of the specification, further illustrate the present invention and, together with the detailed description of the invention, serve to explain the principles of the present invention.
FIG. 1 illustrates a diagram of a vertical cavity surface emitting laser structure;
FIG. 2 illustrates diagrams of a vertical cavity surface emitting laser structure emitting two different patterns of light signals 2(a) and 2(b);
FIG. 3 illustrates a diagram of a target blocking a light signal statically emitted from a vertical cavity surface emitting laser structure before it reaches a detector;
FIG. 4 illustrates diagrams of a vertical cavity surface emitting laser structure cycling through different emission patterns of light signals to determine a map of the target. In 4(a) light signals forming a vertical line are blocked by a vertical bar-shaped target and none reach a detector. When a different pattern of signals is emitted as in 4(b), forming a right angle, one signal reaches the detector. In the presence of a right angle-shaped target as in 4(c), however, the same right angle-shaped pattern as emitted in 4(b) would be blocked;
FIG. 5 illustrates diagrams of a vertical cavity surface emitting laser structure emitting the same pattern of light signals in 5(a) and 5(b). In 5(a) a target blocks all emitted signals, whereas in 5(b) a different target does not block all signals, allowing recognition of a specified target only;
FIG. 6 illustrates diagrams of emitted light signals passing through 6(a) a single lens producing a magnified image of the emitted array and 6(b) a compound lens system producing an expanded version of the emitted array;
FIG. 7 illustrates diagrams of emitted light signals passing through arrays of lenses. The array of lenses in 7(a) expands the diameter of light signals without changing their center spacing. The array of lenses in 7(b) expands the diameter and changes the direction of emitted light signals;
FIG. 8 illustrates a diagram of a target blocking a light signal serially emitted from a vertical cavity surface emitting laser structure before it reaches a detector;
FIG. 9 illustrates how a lens can be used to spread light signals emitted by a vertical cavity surface emitting laser structure into an environment occupied by a target, wherein an emitted signal reflects off of the target and reaches the detector;
FIG. 10 illustrates a system for the present invention; and
FIG. 11 illustrates a flow chart of a method for the present invention.

### DETAILED DESCRIPTION OF THE INVENTION

The particular values and configurations discussed in these non-limiting examples can be varied and are cited merely to illustrate an embodiment of the present invention and are not intended to limit the scope of the invention.

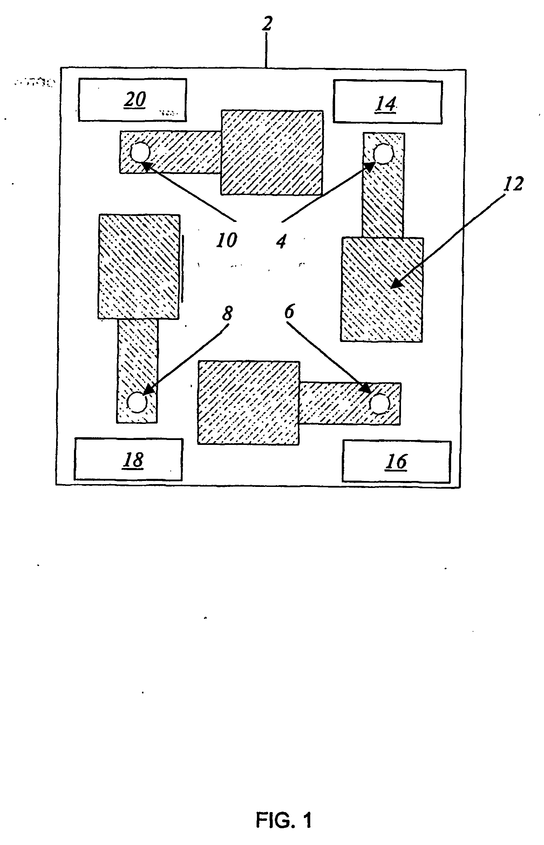

In the following nonlimiting example of this embodiment, FIG. 1 shows a vertical cavity surface emitting laser (VCSEL) structure 2 with a plurality of emission apertures 4, 6, 8, and 10. Emission apertures 4 can be fabricated by using either proton isolation or dielectric oxide techniques to provide both carrier and optical confinement. Emission aperture 4, for instance, is functionally integrated (although they do not have to be integrated) with a bond pad 12 and is electrically coupled to an element 14. Elements 16, 18, and 20 are also shown and can be identical or not identical to each other and to element 14. Upon powering elements, emission apertures emit light signals (not shown) perpendicular to VCSEL structure 2, making them especially amenable to the fabrication of both one and two-dimensional arrays. While the example shown in FIG. 1 (and other figures) comprises a 2×2 array of emission apertures, it should be noted that the fabrication of M×N arrays is also feasible and that the 2×2 array is only provided to simplify explanation.

One of the principle advantages to array fabrication using VCSEL structures 2 is that all of the dimensions in the array can be fabricated using photolithography, thereby incorporating high dimensional tolerances in the placement of the emission apertures. As a result, the high dimensional tolerance produces a precisely defined array of light signals emitted and enables the fabrication of any one or two-dimensional array desired, such as the pattern of a cross. The elements can be electrically connected or coupled in virtually any manner desired as well, permitting light signals to be emitted individually or in groups. Light signals can be emitted in single or multiple spatial modes and can vary in terms of divergence angles and/or the diameter of the light signal being emitted and focused. Light signals can also be emitted in single or multiple wavelengths. By using advanced selective epitaxial techniques, light signals of widely separated wavelengths can be fabricated.

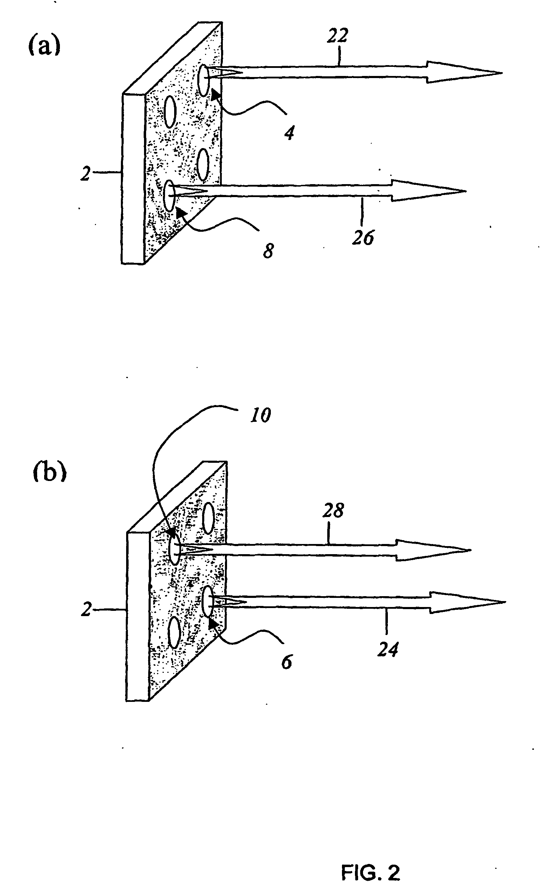

FIG. 2 illustrates the illumination of different patterns of light signals by the same VCSEL structure 2. In FIG. 2(a), emission aperture 4 emits light signal 22 while aperture 8 emits light signal 26. In FIG. 2(b), emission aperture 6 emits light signal 24 while aperture 10 emits light signal 28. Similarly, any other one, or group of two, three, or four, light signals could be emitted from a 2×2 array. It should be reiterated that any array including any number of emission apertures could be constructed, permitting the emission of a variety of light signal patterns.

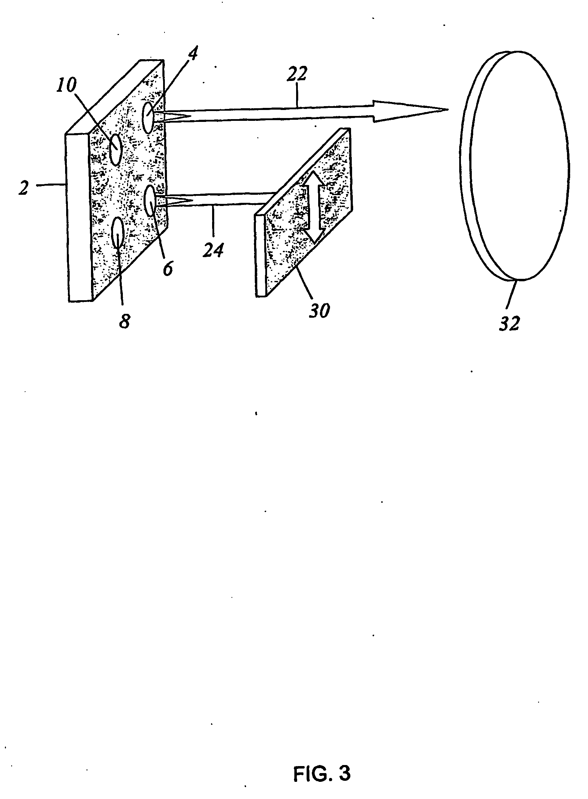

The first preferred embodiment is a reconfigurable static structured light source, which is depicted in FIG. 3. The diagram shows VCSEL structure 2 simultaneously emitting light signals 22 and 24 into an environment from emission apertures 4 and 6, respectively. While different light signals (or sets of signals) of the array can be emitted at different times, the timing of the changes is not directly relevant to the intended function. A target 30 is positioned in the environment between VCSEL structure 2 and a detector 32, which could be any of various types, such as a photodiode. A photodiode detector could either include an individual photodiode, multiple photodiodes individually packaged, or an array of photodiodes on a single structure in a single package.

As target 30 moves upward, the particular light signal received by detector 32 changes from full on (no obstruction), to half on (signal 24 blocked but not signal 22), and finally to full off (both signals 24 and 22 blocked). This happens in an essentially digital, or stepwise, fashion. A single illuminator in a similar geometry would provide only a very gradual change in detector illumination, requiring a more sophisticated algorithm to determine position at the midpoint. However, with this same VCSEL array, the identical function can be provided for target 30 moving orthogonally to that shown in FIG. 3, simply by emitting signals from apertures 6 and 8 instead of 4 and 6, for example. For detection of a diagonally-moving target, signals from apertures 4 and 8 or 6 and 10 would be emitted. Thus, multiple motions could be sensed with a single detector 32 by sequentially emitting light signals from different apertures.

An extension of the concept requires larger element counts. Consider a VCSEL array with 5×2 elements, for example. If a stationary target with a corrugated edge is interposed between the VCSEL array and a detector, the corrugations will block some light signals and not others. By cycling through several fixed patterns of "lit" and "unlit" VCSELs, the detector signal can be interpreted as a map of the corrugated edge. In this way the corrugated obstruction acts as a key and the optical assembly including the VCSEL array and the detector acts as a lock. Electronics known to those skilled in the art can produce locks that recognize only one or several keys. Any emission patterns that correspond in a certain way to the pattern on the target would result in a positive identification, or recognition, by the detector.

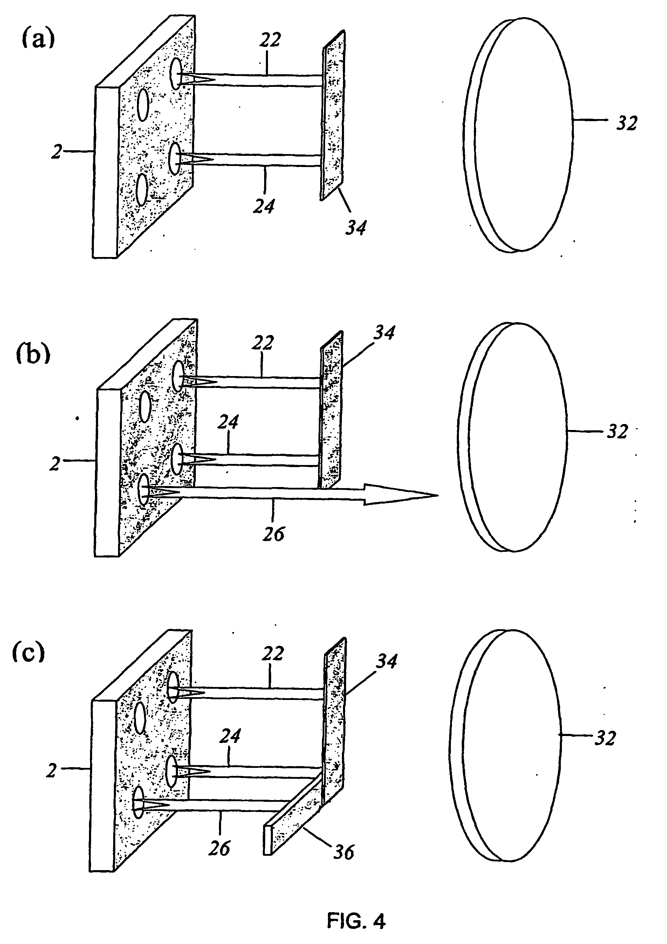

FIG. 4 illustrates VCSEL structure 2 cycling through different emission patterns of light signals to determine a map of a target. In FIG. 4(a), a vertical bar-shaped target 34 blocks light signals 22 and 24 from reaching detector 32. When a different pattern of signals is emitted (22, 24, and 26) as in (b), signal 26 reaches detector 32 while signals 22 and 24 remain blocked. Detector 32, therefore, recognizes that target 34 has no horizontal piece spatially correlated to light signal 26. In the presence of a right angle-shaped target 36 as in FIG. 4(c), however, the same right angle-shaped pattern as emitted in FIG. 4(b) is blocked. Neither signal 22, 24, nor 26 reaches detector 32, indicating to detector 32 that target 36 (unlike target 34) does have a horizontal piece spatially correlated to light signal 26.

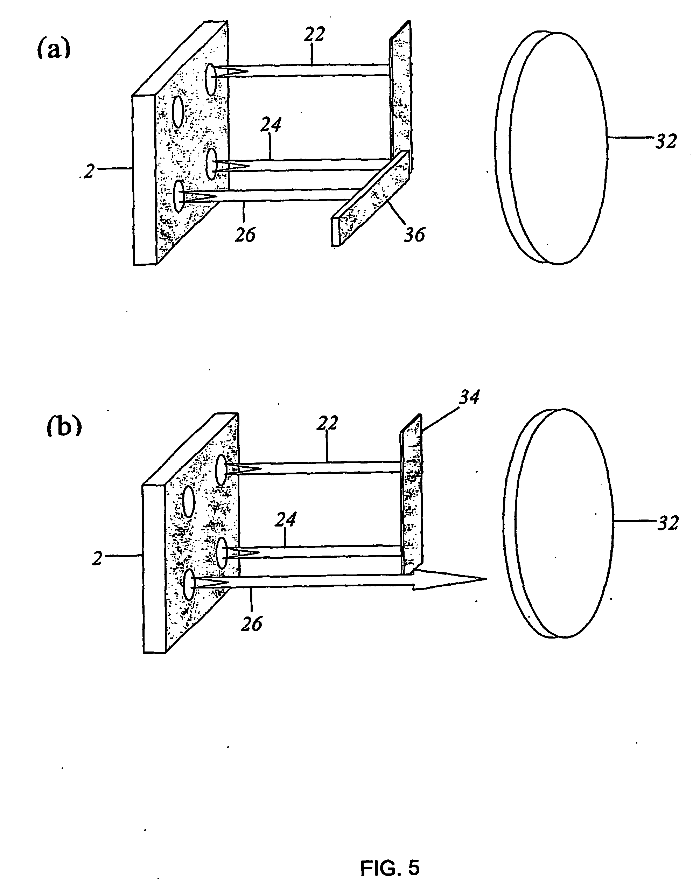

FIG. 5 illustrates how a specified target can be recognized while others are not. In this example, VCSEL structure 2 emits the same pattern of light signals in FIGS. 5(a) and (b), though the shape of the target differs. In FIG. 5(a), target 36 blocks all emitted signals 22, 24, and 26 from reaching detector 32. In FIG. 5(b), target 34 blocks only light signals 22 and 24, permitting signal 26 to reach detector 32. With the same pattern of light signals emitted, therefore, different signals will reach detector 32 depending on the shape of the particular target present in the environment. This difference subsequently could allow for recognition of a specified target when an exact "match" is made by the system.

The aforementioned corrugated opaque obstruction is only one example of possible key configurations. Among other possiblities are arrays of holes or exposed areas on film.

In addition to using a plurality of light sources, the present invention could perform object recognition tasks faster than many current systems by using a camera as a detector. The camera could be one of various types, including a charge-coupled device (CCD) or CMOS camera. When the camera display of a typical current system is divided into separate areas, complex image processing algorithms are often required to measure the partially blocked areas from the uniform light source. When the display of the present invention is divided into separate areas, each area has its own independent illumination differing spatially from adjacent illuminations due to the plurality of light signals emitted. As a result, all of the signals can be detected simultaneously and be quickly summed together to provide the desired information.

A target could also be detected by the composition of its surface. The absorptive characteristics of the surface can absorb and/or reflect light signals differently based on the wavelength of the signals. Emitting light signals of different wavelengths, which might be accomplished by fabricating VCSEL structure 2 with different elements, could, therefore, also indicate the absorptive characteristics of the material. In either situation, detecting a target based on its characteristics, or detecting the characteristics of a target, a microprocessor could determine characteristics by comparing the light signals received by a detector with the signals emitted by a VCSEL structure. If the difference in wavelength among the signals emitted were large enough to detect by a detector, a plurality of detectors (such as detector 32 depicted in the figures) could be used to detect signals within different ranges of wavelength, which might provide more detailed information about the absorptive characteristics of most targets. Features can be compared to characteristics stored in memory..

In order to detect targets of various sizes, optics could be added. A lens or array of lenses can be positioned between VCSEL structure 2 and target 30 such that the lens reproduces the pattern of emitted light signals into a larger or smaller pattern in the image plane. The emission pattern of the image would be identical in shape to the original pattern emitted but different in size. A microprocessor could then correlate the pattern of light signals received by detector 32 in the presence of target 30 with the pattern of signals originally emitted and/or with signals stored in memory.

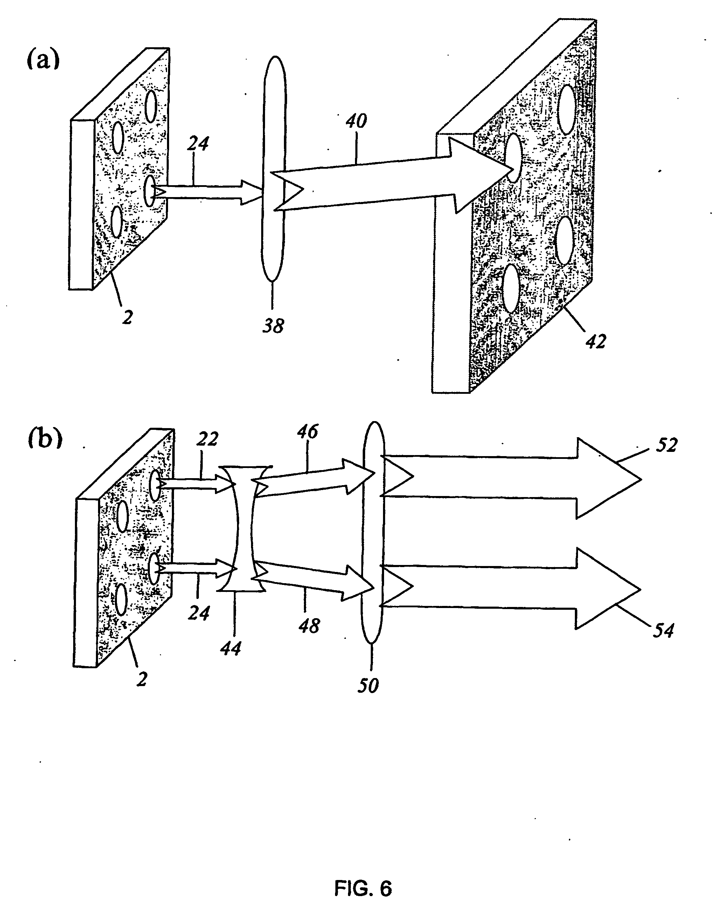

FIG. 6 illustrates two ways in which lenses can be used to alter the size of an array of light signals. In FIG. 6(a), a single lens 38 produces a magnified image 42 of the array emitted by VCSEL structure 2, affording detection of targets larger than the physical array. As light signal 24 enters lens 38, lens 38 magnifies signal 24 into a new light signal 40 having a larger diameter. In this particular configuration, magnified image 42 would be inverted compared to the array originally emitted by VCSEL structure 2. Two lenses could also be used in a collimator-telescope configuration (not shown). In FIG. 6(b) a compound lens system produces an expanded version of the array emitted by VCSEL structure 2. As light signals 22 and 24 enter lens 44, lens 44 manipulates (either through convergence or divergence) signals 22 and 24, creating new light signals 46 and 48, respectively. Signals 46 and 48 then enter a lens 50, which collimates signals 46 and 48 into new signals 52 and 54, respectively. These resulting signals 52 and 54 have a larger diameter than light signals 22 and 24 originally emitted.

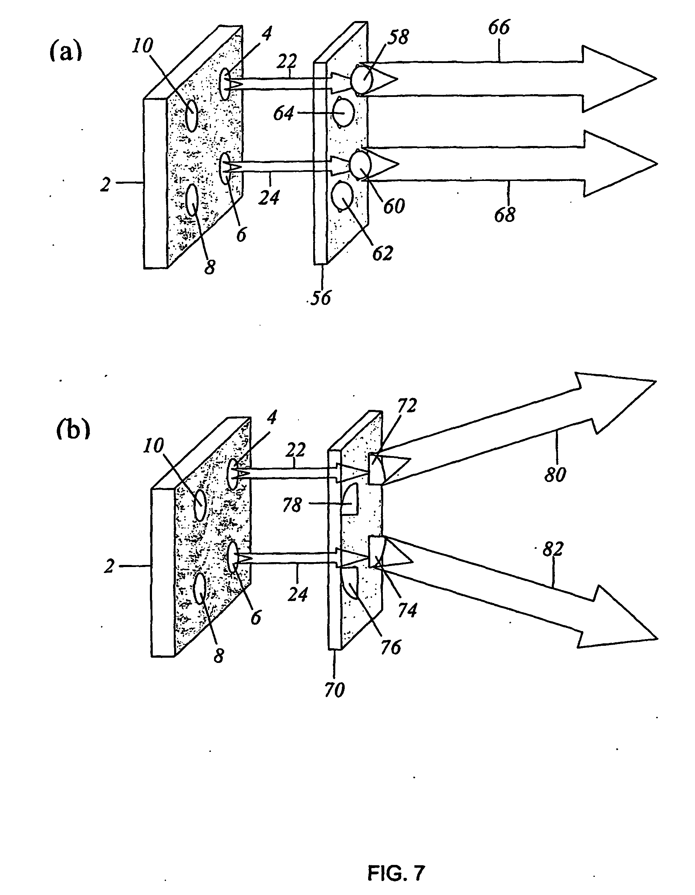

FIG. 7 illustrates alternative configurations of arrays of lenses that can be used to alter the array of light signals emitted by VCSEL structure 2. In FIG. 7(a) lens array 56 contains lenses 58, 60, 62, and 64 that correspond spatially to emission apertures 4, 6, 8, and 10, respectively. Lens 58 expands the diameter of entering light signal 22 into new light signal 66. Similarly, lens 60 expands the diameter of signal 24 into new signal 68. While the lenses of lens array 56 alter the size of the light signals, they do not alter the center spacing of the signals and thus conserve the spatial characteristics of the array emitted by VCSEL structure 2.

In FIG. 7(b) lens array 70 contains lenses 72, 74, 76, and 78 that correspond spatially to emission apertures 4, 6, 8, and 10, respectively. Lens 72 expands the diameter and changes the direction of entering light signal 22 into new light signal 80. Similarly, lens 74 expands the diameter and changes the direction of signal 24 into new signal 82. In this particular example, lens array 70 diverges entering light signals, though other configurations of divergence or convergence could be used as well.

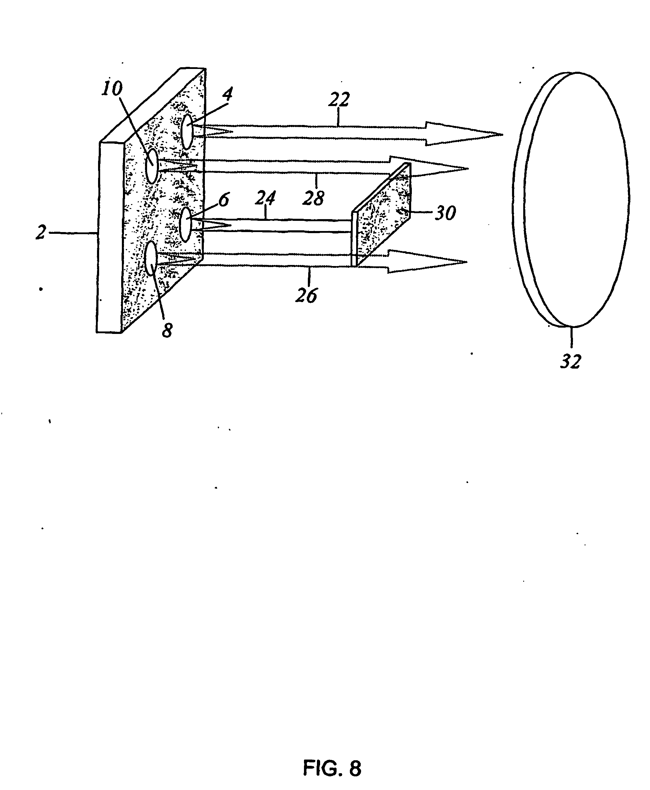

In the second preferred embodiment, the timing of illuminating the individual elements is an integral part of the sensing process. The elements are serially illuminated in a sequence whose temporal characteristics are interpreted. In FIG. 8, VCSEL structure 2 is shown sequentially emitting light signals from emission apertures 4, 6, 8, and 10 in the order 4, 6, 8, 10, 4, 6, 8, 10, etc. Corresponding light signals 22, 24, 26, and 28 are, therefore, emitted from the emission apertures. In this example, three light signals have already been emitted (26, 28, 22), illustrated by the dotted lines, and one is currently lit (24). Light signal 26 has been emitted and has reached detector 32 unobstructed by target 30. Signal 28 was then emitted and similarly reached detector 32 obstructed. Light signal 22 reached target 30 next, also unobstructed. Currently, signal 24 is lit and has been blocked by target 30 before reaching detector 32. If the output of a single detector 32 disposed to receive all of the light signals in the array is monitored over time, the angular (and to a partial extent, the spatial) location of target 30 can be determined by the absence of a signal at the time the particular signal(s) are blocked. The array need not be circular, as linear arrays or multiple concentric rings could be used to map the shape of target 30 by interpreting the time-sequence of the output of detector 32.

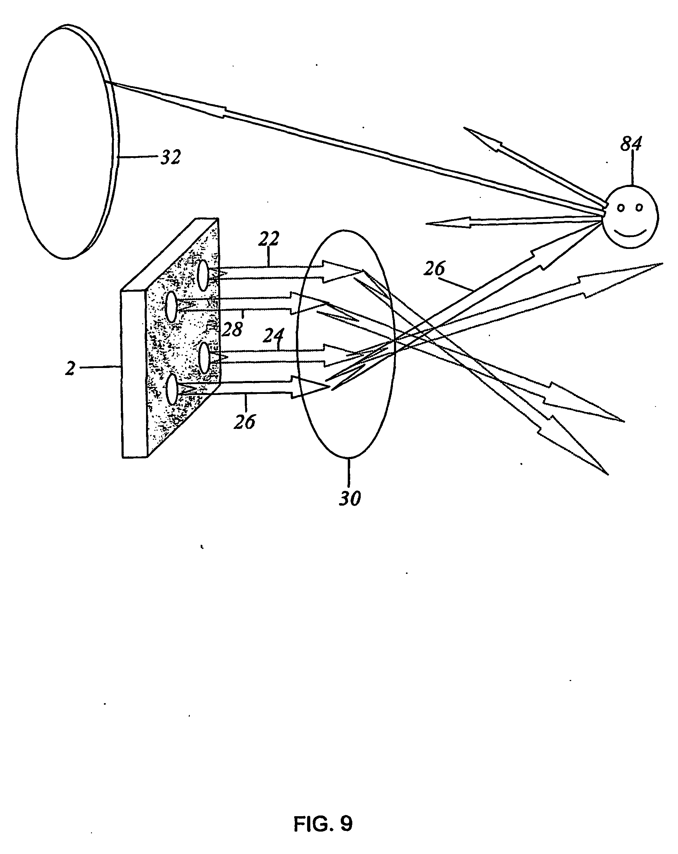

If optics are added, as depicted in FIG. 9, light signals can be steered into different angles. Light signals are shown passing through lens 30, positioned between VCSEL structure 2 and target 84. Lens 30 then redirects the light signals to different places in the environment, allowing a single detector 32 to sense targets 84 at widely separated locations. With only ten VCSEL elements, approximately, a full half-plane of 2π steradians could be monitored.

In this example, light signals 28, 22; and then 24 have already been sequentially emitted, as denoted by the dotted lines, and light signal 26 is currently lit. After being redirected by lens 30, light signal 26 travels until it intercepts target 84. Light signal 26 then reflects off of target 84 and reaches detector 32. It should be noted that target 84 happened to be positioned in the environment such that it lay in the path of light signal 26, rather than light signal 26 specifically seeking target 84. If target 84 were moved, it would lie in the path of a different light signal.

With linear arrays, position of a target along an axis can be detected. One example of a "circular" array application could use a single lens above VCSEL structure 2. This lens could skew each signal into a different angle as the individual elements are sequentially illuminated. A light signal can, therefore, be directed to different areas in an environment at different times by simply illuminating different elements at different times. Measuring the temporal output of a detector disposed to collect reflected light signals can provide information on the presence of a target and of its location. Even if location information is not necessary, the effective scanning of a light signal without moving parts can provide for a purely electrical function rather than a mechanical function. This feature allows for operation at a much lower input power, which could be important in battery-powered applications where energy conservation is often critical.

A lens or array of lenses can be positioned near VCSEL structure 2 such that a lens collimates each light signal passing through. Whereas current optical systems are generally known to collimate a single light signal into one parallel group of signals, the present invention can collimate each of a plurality of signals into corresponding parallel groups. Since each light signal passes through a lens at a different angle, due to the different location of each emission aperture on VCSEL structure 2, each group of collimated signals exits a lens at a different angle.

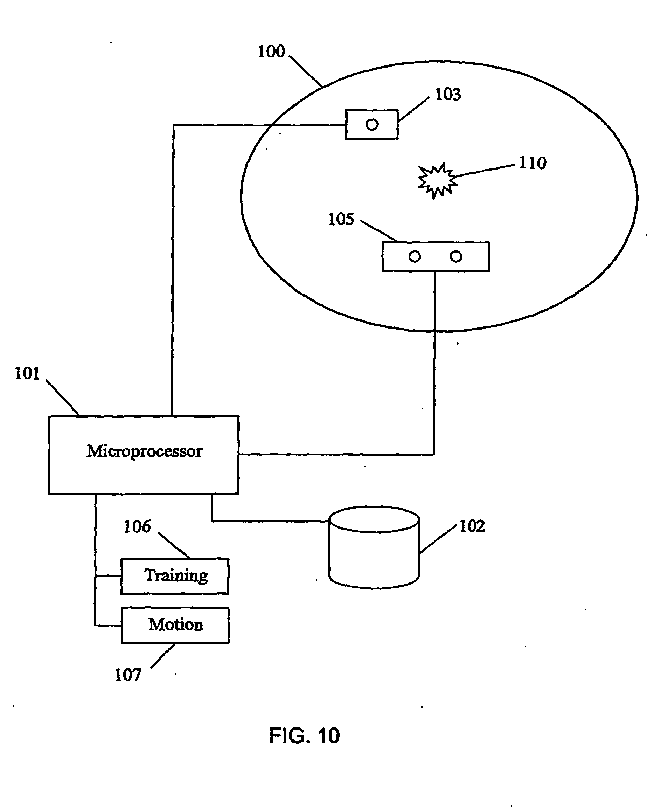

An aspect of the present invention includes a trainable laser optical sensing system for detecting target characteristics using a vertical cavity surface emitting laser. Referring to FIG. 10, a system can include a vertical cavity surface emitting laser structure 105 with at least two emission apertures that could be defined by known processing methods, such as photolithography. A laser signal can be emitted into an environment 100 from each of the emission apertures. The system can also include at least one detector 103 that is operationally responsive to the vertical cavity surface emitting laser structure 105. The system can include a microprocessor 101 that is operationally coupled to the detector(s) 103, VCSEL 105 and a memory 102, such as a database, for storing target data and a training module for allowing the system to be trained to recognize targets 110. The trainable laser optical sensing system can make positive identification of objects once trained where microprocessor 101 references a database 102 and/or using neural network capabilities to correlate the detected pattern of light signals from the target 110 with stored patterns of signals from known targets. The trainable laser optical sensing system can also include a training module 106. The training module would include software used by the microprocessor 101 during training and detection operations in a manner known to those skilled in the art. A motion analysis modulo 107 can also be included to enable the system to determine target mobility characteristics (e.g., velocity, direction).

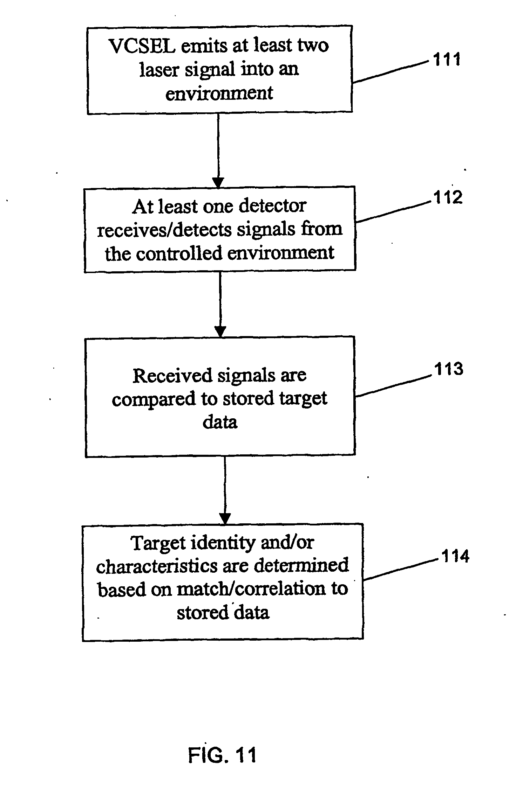

Referring to FIG. 11, a block diagram of method steps undertaken by the system is illustrated. During operation, the vertical cavity surface emitting laser structure can emit at least two laser signals into the environment as shown at block 111. The environment may be occupied by a target. As shown at bock 112, at least one detector may detect the presence of (receives) the laser signals once they have passed through the environment. As shown at block 113, the microprocessor compares received signals with known target characteristics/data stored in memory. The microprocessor then determines the target identity/characteristics, as shown at block 114, based on matching or substantial correlation of laser signals received by the detector(s) with known target characteristic data stored in memory. Within the same vertical cavity surface emitting laser structure, the laser signals emitted can be identical or not identical. Optics can also be added to the system, such that laser signals pass through at least one lens or reflect off of mirror or mirrors after exiting the emission apertures.

The system can be trained by emitting at least one laser signal at a time into an environment containing a known target, or known target characteristics, using a vertical cavity surface emitting laser structure. The known target may be referred to as a test target. The test target interferes with laser signals. Signals reflected off said test target are received by at least one detector. The laser signals, representing target characteristics, are stored in memory.

It should be noted that nearly all of the aforementioned applications, as well as any others, could potentially be addressed using either transmissive or reflective systems.

## Claims

1. A laser optical sensing system for detecting target characteristics, which comprises:
a laser source (105) adapted for operation by illumination through at least two emission apertures (4, 6, 8 10) of an at least 2 aperture-by-at least 2 aperture array, wherein illumination through said at least two emission apertures (4, 6, 8 10) thereby creates at least two laser signals;
at least one detector (103) operationally responsive to said laser source (105);
a microprocessor (101) operationally coupled to said at least one detector (103);
a memory (102) for storing target characteristics; and
a training and detection module (106) for enabling the training of the system for target recognition;
wherein said laser source (105) emits at least two laser signals through said at least two emission apertures (4, 6, 8 10) into an environment occupied by a target (110), said at least one detector (103) detects said at least two laser signals, and said microprocessor (101) determines target characteristics based on comparison of said signals received by said detector (103) with said target characteristics stored in said memory (102).

2. The system of claim 1 wherein said laser source (105) includes a vertical cavity surface emitting laser.

3. The system of claim 1 or claim 2 wherein said detector (103) includes a photodiode.

4. The system of any of the preceding claims further comprising said at least two laser signals passing through at least one lens (50).

5. The system of any of the preceding claims wherein said memory (102) further comprises a neural network enhanced database.

6. The system of any of the preceding claims wherein said memory (102) further comprises a trainable database.

7. A method for detecting target characteristics comprising the steps of:
emitting light through at least two emission apertures (4, 6, 8 10) of an at least 2 aperture-by-at least 2 aperture array into an environment (111) using a vertical cavity surface emitting laser structure, wherein emitting said light through said at least two emission apertures (4, 6, 8 10) thereby creates at least two laser signals;
blocking at least one of said laser signals by at least one target located within said environment (111);
receiving (113) any of said laser signals not blocked by said target with at least one detector(112);
accessing a memory containing stored target characteristics; and
determining target characteristics (114) with a microprocessor by comparing characteristics (113) of signals received by said detector to stored target characteristics contained within said memory.

## Patentansprüche

1. Laseroptisches Erfassungssystem zum Detektieren von Zielcharakteristiken, das folgendes umfaßt:
eine Laserquelle (105), die ausgelegt ist für den Betrieb über Abstrahlung durch mindestens zwei Emissionsöffnungen (4, 6, 8, 10) eines mindestens zwei Öffnungen mal mindestens zwei Öffnungen großen Arrays, wobei die Abstrahlung durch die mindestens zwei Emissionsöffnungen (4, 6, 8, 10) **dadurch** mindestens zwei Lasersignale erzeugt;
mindestens einen Detektor (103), der im Betrieb auf die Laserquelle (105) reagiert;
einen Mikroprozessor (101), der im Betrieb an den mindestens einen Detektor (103) gekoppelt ist;
einen Speicher (102) zum Speichern von Zielcharakteristiken und
ein Trainings- und Detektionsmodul (106) zum Ermöglichen des Trainings des Systems zur Zielerkennung;
wobei die Laserquelle (105) mindestens zwei Lasersignale durch die mindestens zwei Emissionsöffnungen (4, 6, 8, 10) in eine von einem Ziel (110) belegte Umgebung emittiert, wobei der mindestens eine Detektor (103) die mindestens zwei Lasersignale detektiert und der Mikroprozessor (101) Zielcharakteristiken auf der Basis eines Vergleichs der vom Detektor (103) empfangenen Signale mit den im Speicher (102) gespeicherten Zielcharakteristiken bestimmt.

2. System nach Anspruch 1, wobei die Laserquelle (105) einen oberflächenemittierenden Laser (VCSEL - vertical cavity surface emitting laser) enthält.

3. System nach Anspruch 1 oder 2, wobei der Detektor (103) eine Fotodiode enthält.

4. System nach einem der vorhergehenden Ansprüche, weiterhin damit, daß die mindestens zwei Lasersignale durch mindestens eine Linse (50) hindurchtreten.

5. System nach einem der vorhergehenden Ansprüche, wobei der Speicher (102) weiterhin eine durch ein neuronales Netz verbesserte Datenbank umfaßt.

6. System nach einem der vorhergehenden Ansprüche, wobei der Speicher (102) weiterhin eine trainierbare Datenbank umfaßt.

7. Verfahren zum Detektieren von Zielcharakteristiken, mit den folgenden Schritten:
Emittieren von Licht durch mindestens zwei Emissionsöffnungen (4, 6, 8, 10) eines mindestens zwei Öffnungen mal mindestens zwei Öffnungen großen Arrays in eine Umgebung (111) unter Verwendung einer VCSEL-Struktur, wobei das Emittieren des Lichts durch die mindestens zwei Emissionsöffnungen (4, 6, 8, 10) **dadurch** mindestens zwei Lasersignale erzeugt;
Blockieren mindestens eines der Lasersignale durch mindestens ein in der Umgebung (111) liegendes Ziel;
Empfangen (113) irgendeines der nicht vom Ziel blockierten Lasersignale mit mindestens einem Detektor (112);
Zugreifen auf einen Speicher, der gespeicherte Zielcharakteristiken enthält; und
Bestimmen von Zielcharakteristiken (114) mit einem Mikroprozessor durch Vergleichen von Charakteristiken (113) von von dem Detektor empfangenen Signalen mit im Speicher enthaltenen gespeicherten Zielcharakteristiken.

## Revendications

1. Système de détection optique laser pour détecter des caractéristiques de cibles, comprenant :
une source laser (105) conçue pour fonctionner par illumination à travers au moins deux ouvertures d'émission (4, 6, 8, 10) d'un réseau d'au moins 2 ouvertures sur au moins 2 ouvertures, l'illumination à travers lesdites au moins deux ouvertures d'émission (4, 6, 8, 10) créant ainsi au moins deux signaux laser ;
au moins un détecteur (103) réagissant de façon fonctionnelle à ladite source laser (105) ;
un microprocesseur (101) couplé de façon fonctionnelle audit au moins un détecteur (103) ;
une mémoire (102) pour stocker des caractéristiques de cibles ; et
un module d'apprentissage et de détection (106) pour permettre l'apprentissage du système en vue de reconnaître des cibles ;
dans lequel ladite source laser (105) émet au moins deux signaux laser à travers lesdites au moins deux ouvertures d'émission (4, 6, 8, 10) dans un milieu occupé par une cible (110), ledit au moins un détecteur (103) détecte lesdits au moins deux signaux laser, et ledit microprocesseur (101) détermine des caractéristiques de cibles sur la base d'une comparaison desdits signaux reçus par ledit détecteur (103) auxdites caractéristiques de cibles stockées dans ladite mémoire (102).

2. Système selon la revendication 1, dans lequel ladite source laser (105) comporte un laser à cavité verticale et à émission par la surface.

3. Système selon la revendication 1 ou la revendication 2, dans lequel ledit détecteur (103) comporte une photodiode.

4. Système selon l'une quelconque des revendications précédentes, comprenant en outre le passage desdits au moins deux signaux laser à travers au moins une lentille (50).

5. Système selon l'une quelconque des revendications précédentes, dans lequel ladite mémoire (102) comprend en outre une base de données améliorée par un réseau neuronal.

6. Système selon l'une quelconque des revendications précédentes, dans lequel ladite mémoire (102) comprend en outre une base de données pouvant apprendre.

7. Procédé de détection de caractéristiques de cibles, comprenant les étapes consistant à :
émettre de la lumière à travers au moins deux ouvertures d'émission (4, 6, 8, 10) d'un réseau d'au moins 2 ouvertures sur 2 ouvertures dans un milieu (111) à l'aide d'une structure laser à cavité verticale et à émission par la surface, l'émission de ladite lumière à travers lesdites au moins deux ouvertures d'émission (4, 6, 8, 10) créant ainsi au moins deux signaux laser ;
bloquer au moins un desdits signaux laser par au moins une cible située dans ledit milieu (111) ;
recevoir (113) l'un quelconque desdits signaux laser non bloqué par ladite cible à l'aide d'au moins un détecteur (112) ;
accéder à une mémoire contenant des caractéristiques de cibles stockées ; et
déterminer des caractéristiques de cibles (114) à l'aide d'un microprocesseur en comparant des caractéristiques (113) de signaux reçus par ledit détecteur à des caractéristiques de cibles stockées contenues dans ladite mémoire.
